# EUROPÄISCHE PATENTSCHRIFT

(11) **EP 3 274 215 B1**
(45) Veröffentlichungstag und Bekanntmachung des Hinweises auf die Patenterteilung: **08.05.2019**
(21) Anmeldenummer: 16712021.1
(22) Anmeldetag: 23.03.2016
(51) Int. Cl.: B60R 11/02, B29C 65/48, B29L 31/30, B60N 2/80, B60R 11/00, B60N 2/879

(54) **VERFAHREN ZUR HERSTELLUNG EINER KOPFSTÜTZE MIT EINGEBAUTEM FUNKTIONSMODUL**
METHOD FOR MANUFACTURING A HEADREST COMPRISING AN INTEGRATED FUNCTIONAL MODULE
PROCÉDÉ DE FABRICATION D'UN APPUI-TÊTE POURVU D'UN MODULE FONCTIONNEL INTÉGRÉ

(30) Priorität: 23.03.2015 DE 102015205241
(43) Veröffentlichungstag der Anmeldung: 31.01.2018
(73) Patentinhaber: Adient Luxembourg Holding S.à r.l., 1855 Luxembourg (LU)
(72) Erfinder: FRITSCH, Christophe, 67460 Souffelweyersheim (FR); MANDUZIO, Felix, 67400 Illkirch-Graffenstaden (FR); MORINIÈRE, Christophe, 67810 Holtzheim (FR)
(74) Vertreter: Schwöbel, Thilo K.
(86) Internationale Anmeldenummer: PCT/EP2016/056400
(87) Internationale Veröffentlichungsnummer: WO 2016/151022

(56) Entgegenhaltungen:
- JP-A- 2007 238 005
- US-A1- 2010 148 550
- US-A1- 2012 161 481

## Beschreibung

### Stand der Technik

Die vorliegende Erfindung betrifft ein Verfahren zur Herstellung einer Kopfstütze mit eingebautem Funktionsmodul.

US-A-2012/0161481 beschreibt eine Kopfstütze mit eingebautem Funktionsmodul.

Die im Stand der Technik bekannten Verfahren zur Herstellung einer Kopfstütze mit eingebautem Funktionsmodul führen nicht zur Produktion von gebrauchsfähigen Kopfstützen, welche die von der ECE 17 geforderten Kriterien erfüllen.

### Offenbarung der Erfindung

Es ist eine Aufgabe der vorliegenden Erfindung, ein Verfahren zur Herstellung einer Kopfstütze mit eingebautem Funktionsmodul zur Verfügung zu stellen, welche zur Produktion von gebrauchsfähigen Kopfstützen mit eingebautem Funktionsmodul führt, die die von der ECE 17 Regulierung geforderten Kriterien erfüllen.

Die Aufgabe der vorliegenden Erfindung wird gelöst durch ein Verfahren zur Herstellung einer Kopfstütze mit eingebautem Funktionsmodul, wobei das Verfahren die folgenden Verfahrensschritte aufweist:
- Montieren des Funktionsmoduls auf eine Stützstange eines Fahrzeugsitzes; und
- Umschließen des auf die Stützstange montierten Funktionsmoduls mittels eines auf einem Vorderteil angebrachten Gehäuses und einem Rückteil; und
- Einführen eines Kabelrohrs in ein Loch des Vorderteils oder des Rückteils, wobei das Kabelrohr zur Aufnahme eines Kabels dient;
- Befestigen des Vorderteils, des Rückteils und der Stützstange mit Befestigungsmitteln.

Gegenüber dem Stand der Technik hat die erfindungsgemäße Gewebestruktur dabei den Vorteil, dass eine Kopfstütze modulartig hergestellt werden kann und ein beliebiges Funktionsmodul in die Kopfstütze eingebaut werden kann.

In einer weiteren Ausführungsform umfasst das Verfahren den Verfahrensschritt, dass Seitenteile mit akustischen Deckeln seitlich auf das Gehäuse angebracht werden.

In einer weiteren Ausführungsform umfasst das Verfahren den Verfahrensschritt, dass die akustischen Deckel an ihrem Randbereich auf die Seitenteile aufgeklebt werden.

In einer weiteren Ausführungsform ist es vorgesehen, dass die Befestigungsmittel Clips des Vorderteils und/oder des Rückteils umfassen.

Dies hat den Vorteil, dass trotz Stabilität ein gewisses Maß an Elastizität geliefert wird, wodurch die Wahrscheinlichkeit eines unerwünschten Betriebsgeräuschs oder unerwünschter Betriebsgeräusche reduziert werden kann.

In einer weiteren Ausführungsform ist es vorgesehen, dass das Einführen des Kabelrohrs in das Loch des Vorderteils oder des Rückteils so weit vorgenommen wird, bis ein Trägerflansch des Kabelrohrs das Loch weitgehend ausfüllt.

In einer weiteren Ausführungsform ist es vorgesehen, dass das Funktionsmodul eine Lautsprechereinheit ist.

In einer weiteren Ausführungsform ist es vorgesehen, dass das Gehäuse Polyethylen hoher Dichte (PE-HD) umfasst.

In einer weiteren Ausführungsform ist es vorgesehen, dass das Vorderteil Polycarbonate/Acrylitril Butadien Styrol (ABS-PC) umfasst.

In einer weiteren Ausführungsform ist es vorgesehen, dass das Kabelrohr Polycaprolactam (PA 6) umfasst.

Dies hat den Vorteil, dass die Stabilitätskriterien der ECE 17 Regulierung eingehalten werden.

Weiterhin betrifft die Erfindung eine Kopfstütze mit eingebautem Funktionsmodul.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Figuren

- Figur 1: zeigt den Verfahrensschritt 100, bei welchem ein Gehäuse 102 an das Vorderteil 104 der erfindungsgemäßen Kopfstütze 1000 anmontiert wird.
- Figur 2: zeigt den Verfahrensschritt 200, bei welchem eine U-förmige Stützstange 204 mit einer Lautsprechereinheit 202 bestückt wird.
- Figur 3: zeigt den Verfahrensschritt 300, bei welchem eine Zusammenmontage des Gehäuses 102, der U-förmigen Stützstange 204 mit aufmontierter Lautsprechereinheit 202 und eines Rückteils 302 der erfindungsgemäßen Kopfstütze erfolgt.
- Figur 4: zeigt eine Positionierung des Kabelrohrs 208 in das Loch 502 des Vorderteils 104.
- Figur 5: zeigt wie der Trägerflansch 212 eine Gewebestruktur einer Verkleidung gegen das Vorderteil 102 drückt.
- Figur 6: zeigt die Befestigung des Rückteils 302 und der Stützstange 204 an das Gehäuse im oberen Teil der Kopfstütze 1000.
- Figur 7: zeigt die Befestigung des Rückteils 302 und der Stützstange 204 an das Gehäuse im unteren Teil der Kopfstütze 1000.
- Figur 8: zeigt den Befestigungsvorgang 800 von Seitenteilen 802 a, b.
- Figur 9: zeigt einen Frontalschnitt auf das Innere der Kopfstütze.
- Figur 10: zeigt den Verfahrensschritt, bei welchem akustische Deckel 1002 a,b auf die Seitenteile 802a,b gesetzt werden.
- Figur 11: zeigt die erfindungsgemäße Kopfstütze 1000 aufmontiert auf einem Sitzrahmen 1106.

### Ausführungsformen der Erfindung

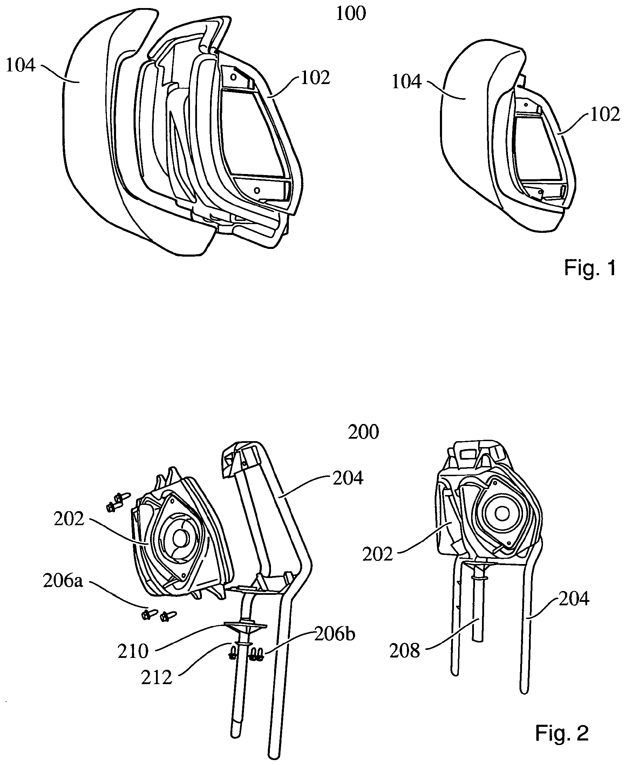

**Figur 1** zeigt den Verfahrensschritt 100, bei welchem ein Gehäuse 102 an das Vorderteil 104 der erfindungsgemäßen Kopfstütze 1000 anmontiert wird, wobei das Vorderteil 104 z.B. mittels Haken an das das Gehäuse 102 anmontiert werden kann. Zwischen dem Gehäuse 102 an dem Vorderteil 104 kann ein Schaumstoffbelag eingebettet sein, um ein unerwünschtes Betriebsgeräusch oder unerwünschte Betriebsgeräusche zu vermeiden. Das Gehäuse 102 kann beispielsweise aus Polyethylen hoher Dichte (PE-HD) bestehen. Das Vorderteil 104 kann beispielsweise aus Polycarbonate/Acrylitril Butadien Styrol (ABS-PC) bestehen. Das Vorderteil 104 kann ferner Verstärkungslinien aufweisen, um die Wahrscheinlichkeit eines Bruchs zu senken.
**Figur 2** zeigt den Verfahrensschritt 200, bei welchem eine U-förmige Stützstange 204 mit einer Lautsprechereinheit 202 bestückt wird, wobei eine Befestigung der Lautsprechereinheit 202 an die U-förmige Stützstange 204 mittels Schrauben 206 a, b erfolgt. An die Lautsprechereinheit 202 wird ein Kabelrohr 208 montiert, welches dazu ausgebildet ist, ein Kabel und ein Verbindungskabel der Lautsprechereinheit 202 aufzunehmen. Das Kabelrohr 208 weist eine Befestigungsplatte 210 und einen Trägerflansch 212 auf, um im montierten Zustand eine zusätzliche Stabilität zu liefern. Das Kabelrohr 208 kann beispielsweise aus Polycaprolactam (PA 6) bestehen. Die U-förmige Stützstange 204 kann beispielsweise aus Chrom bestehen. Die U-förmige Stützstange 204 kann die beiden Schenkel verbindende, horizontal verlaufende Platten aufweisen, in welche Löcher eingestanzt sind, in welche Schrauben zur Fixierung der Lautsprechereinheit 202 eingestanzt sein können. Ferner können diese horizontal verlaufenden Platten Ausnehmungen aufweisen, welche dazu ausgebildet sind, die Clips beispielsweise des Vorderteils 104 oder des Rückteils 302 aufzunehmen und somit die Komponenten der Kopfstütze gegeneinander zu fixieren.

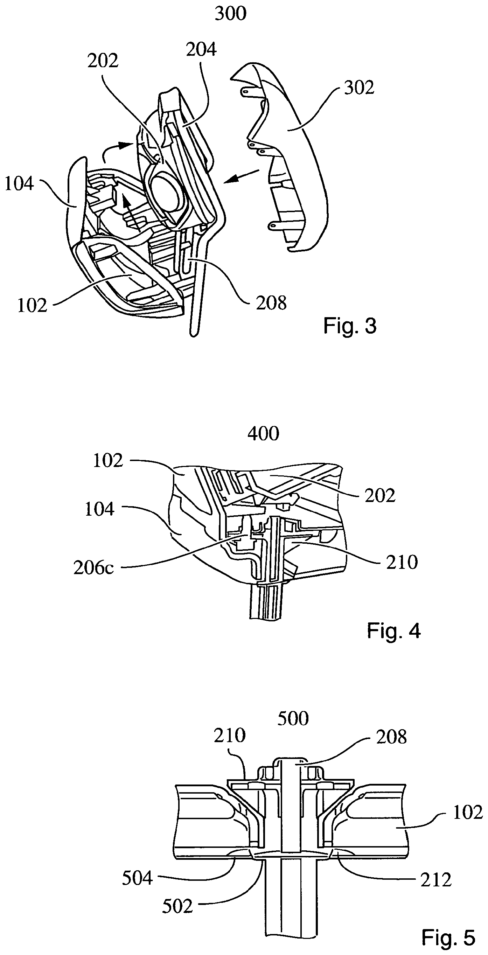

**Figur 3** zeigt den Verfahrensschritt 300, bei welchem eine Zusammenmontage des Gehäuses 102, der U-förmigen Stützstange 204 mit aufmontierter Lautsprechereinheit 202 und eines Rückteils 302 der erfindungsgemäßen Kopfstütze erfolgt. Dabei wird das Gehäuse 102 mitsamt dem Vorderteil 104 von unten nach oben gegen die U-förmige Stützstange 204 bewegt, wobei das Kabelrohr 208 in ein Loch des Gehäuses 102 eingeführt wird und das Gehäuse dann weiter in Richtung U-förmigen Stützstange 204 rotiert wird. Primäre Aufgabe des Gehäuses 102 ist es, die Lautsprechereinheit 202 aufzunehmen. Dafür weist das Gehäuse 102 spezielle Vorsprünge und Einbuchtungen auf, um eine bestimmte Position der Lautsprechereinheit 202 zu fixieren. Das Rückteil 302 wird von hinten gegen die U-förmige Stützstange 204 bewegt. Die genannten Komponenten können beispielsweise mittels Clips, die beispielsweise an dem Vorderteil 104 angebracht sind, miteinander verbunden werden.
**Figur 4** zeigt, wie das Kabelrohr 208 in das Loch 502 des Vorderteils 104 positioniert worden ist. Mittels einer Schraube 206c ist die Befestigungsplatte 201 an einer plattenförmigen Komponente der Kopfstütze oder z.B. auch an einer der horizontal verlaufenden Platten der U-förmigen Stützstange 204, befestigt. Der Trägerflansch 212 des Kabelrohrs 208 befindet sich in Höhe des Loches 502 des Vorderteils 104.
   Wie in **Figur 5** ersichtlich, ist der Trägerflansch 212 dazu ausgebildet, eine Gewebestruktur einer Verkleidung gegen das Vorderteil 102 zu drücken, sodass die Ränder des Loches 502 geschlossen werden. Gleichzeitig wird die Wahrscheinlichkeit für ein Auftreten eines unerwünschten Betriebsgeräuschs oder unerwünschter Betriebsgeräusche reduziert.

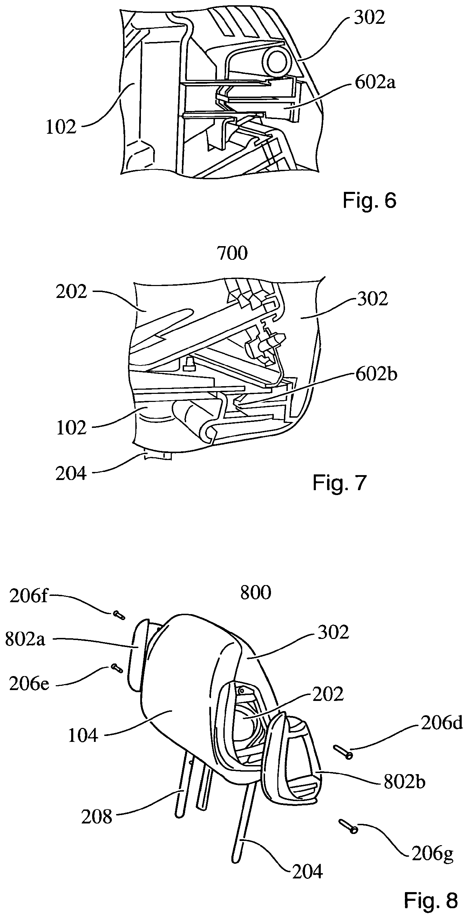

**Figur 6** zeigt die Befestigung des Rückteils 302 und der Stützstange 204 an das Gehäuse im oberen Teil der Kopfstütze 1000. Mittels eines Befestigungsclips 602a des Rückteils 302, welcher in eine gabelähnliche Struktur des Vorderteils 104 aufgenommen wird, werden das Rückteil 302 und das Vorderteil 104 miteinander verbunden. Über dem Befestigungsclip 602a verläuft transversal der obere Bogenteil der U-förmigen Stützstange 204.
**Figur 7** zeigt den Befestigungsvorgang 700 des Rückteils 302 und der Stützstange 204 an das Gehäuse im unteren Teil der Kopfstütze 1000. Mittels eines weiteren Befestigungsclips 602b des Rückteils 302, welcher in eine weitere gabelähnliche Struktur des Vorderteils 104 aufgenommen wird, werden das Rückteil 302 und das Vorderteil 104 miteinander verbunden. Figur 7 zeigt ebenfalls wie mittels Schrauben die Lautsprechereinheit 202 an einer der horizontal verlaufenden Platten der U-förmigen Stützstange 204 befestigt ist.
**Figur 8** zeigt den Befestigungsvorgang 800 von Seitenteilen 802 a, b an die bisher zusammen montierten Komponenten der Kopfstütze mittels Schrauben 206 g, h. Die Seitenteile 802 a, b können beispielsweise aus Polycarbonate/Acrylitril Butadien Styrol (ABS-PC) bestehen. Sie weisen mittig eine Ausnehmung auf.

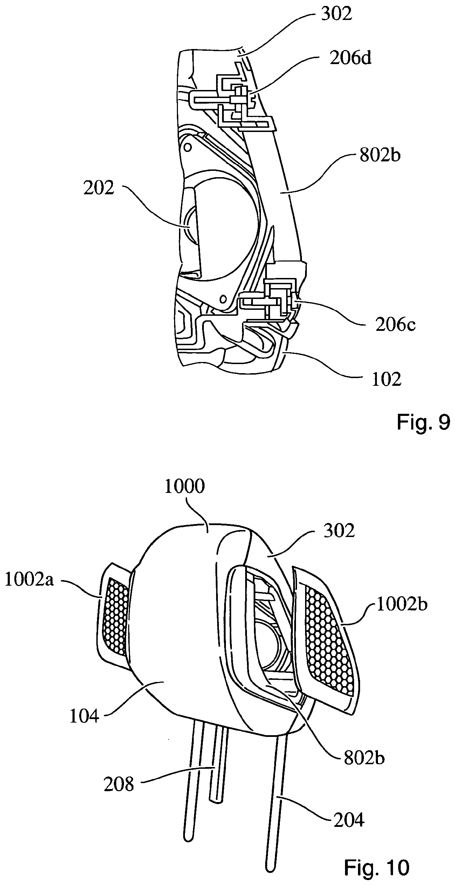

**Figur 9** zeigt einen Frontalschnitt auf das Innere der Kopfstütze, wobei nur ein Teil der Lautsprechereinheit 202 und eines der seitlich montierten Seitenteile 802 b gezeigt wird. Mittels einer Schraube 206c im unteren Bereich erfolgt eine Befestigung an das Vorderteil 104 und mittels einer Schraube 206d im oberen Bereich erfolgt eine Befestigung an das Rückteil 302.
**Figur 10** zeigt den Verfahrensschritt, bei welchem akustische Deckel 1002 a,b mit einem Rahmen und zentralen wabenähnlichen Strukturen auf die Seitenteile 802a,b gesetzt werden. Eine Befestigung erfolgt vorzugsweise mittels Kleben im Bereich der Rahmen. Dafür bestehen die akustischen Deckel 1002 a,b vorzugsweise aus Polycarbonate/Acrylitril Butadien Styrol (ABS-PC). Im Bereich der wabenähnlichen Strukturen ist die Materialdicke reduziert, um eine akustische Performance zu verbessern. Durch aufgelegte kongruente wabenähnliche Gewebestrukturen, kann die Schallqualität der eingebauten Lautsprechereinheit 202 ebenfalls positiv beeinflusst werden.

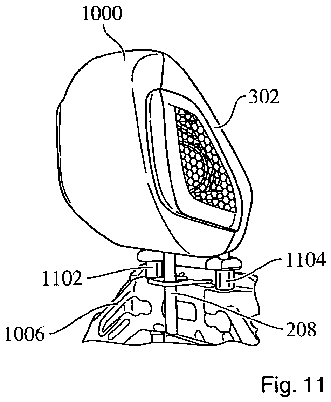

**Figur 11** zeigt die erfindungsgemäße Kopfstütze 1000 aufmontiert auf einem Sitzrahmen 1106 eines Fahrzeugsitzes. Jeder der Schenkel der U-förmige Stützstange 204 befindet sich verschiebbar und in bestimmten Positionen fixierbar in einer Lünette 1102 bzw. 1104, wobei die erste und/oder die zweite Lünette beispielsweise Sprungfedern aufweisen können, um einerseits Elastizität und Stabilität zu liefern. Das Kabelrohr 208 verläuft ventral von dem Sitzrahmen 1006 und verläuft vorzugsweise im Sitzpolster des Fahrzeugsitzes.

### BEZUGSZEICHENLISTE

- 100: Verkleidungsvorgang einer rückwärtigen Gehäuseplatte
- 102: Gehäuse
- 104: Vorderteil
- 200: Ausstattungsvorgang einer U-förmigen Stützstange
- 202: Lautsprechereinheit
- 204: U-förmige Stützstange
- 206 a,b,c,d,e,f,g: Schrauben
- 208: Kabelrohr
- 210: Befestigungsplatte
- 212: Trägerflansch
- 300: Zusammenmontage von Gehäuse, Stützstange und Rückteil
- 302: Rückteil
- 400: Verbund aus Vorderteil und Kabelrohr
- 500: Kabelrohr im Loch des Gehäuses
- 502: Loch
- 504: Verkleidung
- 600: Befestigung des Rückteils und der Stützstange an das Gehäuse im oberen Teil
- 602a,b: Befestigungsclip
- 700: Befestigungsvorgang des Rückteils und der Stützstange an das Gehäuse im unteren Teil
- 800: Befestigungsvorgang von Seitenteilen
- 802a,b: Seitenteile
- 1000: Kopfstütze mit eingebauter Lautsprechereinheit auf Stützstange montiert
- 1002a,b: akustische Deckel
- 1102: Lünette mit Sprungfedern
- 1104: weitere Lünette
- 1106: Sitzrahmen

## Patentansprüche

1. Verfahren zur Herstellung einer Kopfstütze (1000) mit eingebautem Funktionsmodul, wobei das Verfahren die folgenden Verfahrensschritte aufweist:
- ein Montieren des Funktionsmoduls auf eine Stützstange (204) eines Fahrzeugsitzes; und
- ein Umschließen des auf die Stützstange (204) montierten Funktionsmoduls mittels eines auf einem Vorderteil (104) angebrachten Gehäuses (102) und einem Rückteil (302); und
- ein Einführen eines Kabelrohrs (208) in ein Loch (502) des Vorderteils (104) oder des Rückteils (302), wobei das Kabelrohr (208) zur Aufnahme eines Kabels dient;
- ein Befestigen des Vorderteils (104), des Rückteils (302) und der Stützstange (204) mit Befestigungsmitteln.

2. Verfahren nach Anspruch 1, **dadurch gekennzeichnet, dass** das Verfahren ferner den Verfahrensschritt umfasst:
- ein Anbringen von Seitenteilen (802 a,b) mit akustischen Deckeln (1002 a,b) seitlich auf das Gehäuse (102).

3. Verfahren nach Anspruch 2, **dadurch gekennzeichnet, dass** das Verfahren den Verfahrensschritt umfasst:
- ein Aufkleben der akustischen Deckel (1002 a,b) an ihrem Randbereich auf die Seitenteile (802 a,b).

4. Verfahren nach einem der vorhergehenden Ansprüche, **dadurch gekennzeichnet, dass** die Befestigungsmittel Clips (602 a,b) des Vorderteils (104) und/oder des Rückteils (302) umfassen.

5. Verfahren nach einem der vorhergehenden Ansprüche, **dadurch gekennzeichnet, dass** das Einführen des Kabelrohrs (208) in das Loch (502) des Vorderteils (104) oder des Rückteils (302) so weit vorgenommen wird bis ein Trägerflansch (212) des Kabelrohrs (208) das Loch (502) weitgehend ausfüllt.

6. Verfahren nach einem der vorhergehenden Ansprüche, **dadurch gekennzeichnet, dass** das Funktionsmodul eine Lautsprechereinheit (202) ist.

7. Verfahren nach einem der vorhergehenden Ansprüche, **dadurch gekennzeichnet, dass** das Gehäuse (102) Polyethylen hoher Dichte, PE-HD, umfasst.

8. Verfahren nach einem der vorhergehenden Ansprüche, **dadurch gekennzeichnet, dass** das Vorderteil (104) Polycarbonate/Acrylitril Butadien Styrol, ABS-PC, umfasst.

9. Verfahren nach einem der vorhergehenden Ansprüche, **dadurch gekennzeichnet, dass** das Kabelrohr (208) Polycaprolactam, PA 6, umfasst.

10. Kopfstütze (1000) mit eingebautem Funktionsmodul, **dadurch gekennzeichnet, dass** die Kopfstütze (1000) mit dem eingebautem Funktionsmodul mittels eines Verfahrens gemäß den Ansprüchen 1-9 hergestellt wird.

## Claims

1. Method for manufacturing a headrest (1000) comprising an integrated functional module, wherein the method comprises the following method steps:
- mounting the functional module on a supporting rod (204) of a vehicle seat; and
- enclosing the functional module mounted on the supporting rod (204) by means of a housing (102), which is fitted on a front part (104), and a rear part (302); and
- introducing a cable tube (208) into a hole (502) in the front part (104) or in the rear part (302), wherein the cable tube (208) serves for receiving a cable;
- fastening the front part (104), the rear part (302) and the supporting rod (204) using fastening means.

2. Method according to Claim 1, **characterized in that** the method further comprises the method step:
- fitting side parts (802 a,b) with acoustic covers (1002 a,b) laterally on the housing (102).

3. Method according to Claim 2, **characterized in that** the method comprises the method step:
- adhesively bonding the acoustic covers (1002 a,b) at their edge region to the side parts (802 a,b).

4. Method according to one of the preceding claims, **characterized in that** the fastening means comprise clips (602 a,b) of the front part (104) and/or of the rear part (302).

5. Method according to one of the preceding claims, **characterized in that** the cable tube (208) is introduced into the hole (502) in the front part (104) or in the rear part (302) until a carrier flange (212) of the cable tube (208) substantially fills the hole (502).

6. Method according to one of the preceding claims, **characterized in that** the functional module is a loudspeaker unit (202).

7. Method according to one of the preceding claims, **characterized in that** the housing (102) comprises high-density polyethylene, HDPE.

8. Method according to one of the preceding claims, **characterized in that** the front part (104) comprises polycarbonate/acryonitrile-butadiene-styrene, ABS-PC.

9. Method according to one of the preceding claims, **characterized in that** the cable tube (208) comprises polycaprolactam, PA 6.

10. Headrest (1000) comprising an integrated functional module, **characterized in that** the headrest (1000) comprising the integrated functional module is manufactured by means of a method according to Claims 1-9.

## Revendications

1. Procédé de fabrication d'un appuie-tête (1000) pourvu d'un module fonctionnel intégré, dans lequel le procédé comprend les étapes de procédé suivantes:
- monter le module fonctionnel sur une barre de soutien (204) d'un siège de véhicule; et
- entourer le module fonctionnel monté sur la barre de soutien (204) au moyen d'un boîtier (102) installé sur une partie avant (104) et d'une partie arrière (302);
- introduire un tube à câble (208) dans un trou (502) de la partie avant (104) ou de la partie arrière (302), dans lequel le tube à câble (208) est destiné à contenir un câble; et
- fixer la partie avant (104), la partie arrière (302) et la barre de soutien (204) avec des moyens de fixation.

2. Procédé selon la revendication 1, **caractérisé en ce que** le procédé comprend en outre l'étape de procédé suivante:
- poser des pièces latérales (802 a, b) avec des couvercles acoustiques (1002 a, b) latéralement sur le boîtier (102).

3. Procédé selon la revendication 2, **caractérisé en ce que** le procédé comprend l'étape de procédé suivante:
- coller les couvercles acoustiques (1002 a, b) par leur région de bord sur les pièces latérales (802 a, b).

4. Procédé selon l'une quelconque des revendications précédentes, **caractérisé en ce que** les moyens de fixation comprennent des clips (602 a, b) de la partie avant (104) et/ou de la partie arrière (302).

5. Procédé selon l'une quelconque des revendications précédentes, **caractérisé en ce que** l'on effectue l'introduction du tube à câble (208) dans le trou (502) de la partie avant (104) ou de la partie arrière (302) jusqu'à ce qu'une bride de support (212) du tube à câble (208) remplisse largement le trou (502).

6. Procédé selon l'une quelconque des revendications précédentes, **caractérisé en ce que** le module fonctionnel est une unité de haut-parleur (202).

7. Procédé selon l'une quelconque des revendications précédentes, **caractérisé en ce que** le boîtier (102) comprend du polyéthylène haute densité, PE-HD.

8. Procédé selon l'une quelconque des revendications précédentes, **caractérisé en ce que** la partie avant (104) comprend du polycarbonate/acrylonitrile-butadiène-styrène, ABS-PC.

9. Procédé selon l'une quelconque des revendications précédentes, **caractérisé en ce que** le tube à câble (208) comprend du polycaprolactame, PA 6.

10. Appuie-tête (1000) pourvu d'un module fonctionnel intégré, **caractérisé en ce que** l'appuie-tête (1000) pourvu d'un module fonctionnel intégré est fabriqué au moyen d'un procédé selon l'une quelconque des revendications 1 à 9.
